# EUROPÄISCHE PATENTANMELDUNG

(11) **EP 3 141 326 A1**
(43) Veröffentlichungstag der Anmeldung: **15.03.2017**
(21) Anmeldenummer: 16184441.0
(22) Anmeldetag: 17.08.2016
(51) Int. Cl.: B23B 31/30, B24B 41/06

(54) **HYDRAULISCHE SPANNVORRICHTUNG**

(30) Priorität: 09.09.2015 DE 102015115180
(71) Anmelder: GDS Präzisionszerspanungs GmbH, 72131 Ofterdingen (DE)
(72) Erfinder: Dürr, Dietmar, 72144 Dußlingen (DE)
(74) Vertreter: Daub, Thomas

(57) **Zusammenfassung**

Die Erfindung geht aus von einer Spannvorrichtung, insbesondere einer hydraulische Spannvorrichtung, mit einem Grundkörper (10) und zumindest einem hydraulisch betätigbaren Spannelement (12), das vom Grundkörper (10) ausgebildet und dazu vorgesehen ist, zumindest ein Spannstück (16) radial und/oder axial zu verspannen.

Es wird vorgeschlagen, dass die Spannvorrichtung eine Hydraulikeinheit (18) umfasst, die zu einer autonomen Erzeugung eines Hydraulikdrucks zu einer Auslenkung des zumindest einen Spannelements (12) vorgesehen ist.

## Beschreibung

### Stand der Technik

Die Erfindung betrifft eine Spannvorrichtung, insbesondere eine hydraulische Spannvorrichtung, nach dem Oberbegriff des Patentanspruchs 1.

Es ist bereits eine Spannvorrichtung, insbesondere eine hydraulische Spannvorrichtung, mit einem Grundkörper und zumindest einem hydraulisch betätigbaren Spannelement, das vom Grundkörper ausgebildet und dazu vorgesehen ist, zumindest ein Spannstück radial und/oder axial zu verspannen, vorgeschlagen worden.

Die Aufgabe der Erfindung besteht insbesondere darin, eine gattungsgemäße Spannvorrichtung mit verbesserten Eigenschaften hinsichtlich einer Betriebssicherheit und/oder einer erhöhten Bearbeitungspräzision bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Spannvorrichtung, insbesondere einer hydraulischen Spannvorrichtung, mit einem Grundkörper und zumindest einem hydraulisch betätigbaren Spannelement, das vom Grundkörper ausgebildet und dazu vorgesehen ist, zumindest ein Spannstück radial und/oder axial zu verspannen.

Es wird vorgeschlagen, dass die Spannvorrichtung eine Hydraulikeinheit umfasst, die zu einer autonomen Erzeugung eines Hydraulikdrucks zu einer Auslenkung des zumindest einen Spannelements vorgesehen ist. Dadurch kann vorteilhaft eine maschinenunabhängige Verspannung des Spannstücks erzielt werden. Der Hydraulikdruck kann daher auch bei einem Ausfall einer mit der Spannvorrichtung gekoppelten Bearbeitungsmaschine aufrecht erhalten werden. Weiterhin kann eine besonders hohe Bearbeitungspräzision erzielt werden. Unter einem "Spannstück" soll in diesem Zusammenhang insbesondere ein Werkzeug und/oder ein Werkstück verstanden werden, das dazu vorgesehen ist, vom zumindest einen Spannelement eingespannt zu werden. Unter einem "Spannelement" soll in diesem Zusammenhang insbesondere eine Wandung verstanden werden, die zumindest bereichsweise, bevorzugt vollständig, einen Aufnahmebereich für das Spannstück radial umläuft. Das zumindest eine Spannelement weist eine, dem Fachmann als sinnvoll erscheinende, geringe Wandstärke auf. Das zumindest eine Spannelement ist dazu vorgesehen, elastisch ausgelenkt und/oder elastisch deformiert zu werden. Das zumindest eine Spannelement ist dazu vorgesehen, während einer Auslenkung ein im Aufnahmebereich angeordnetes Spannstück zu verspannen und/oder zu verklemmen. Das zumindest eine Spannelement bildet einen Teil eines Hydrodehn-Spannsystems. Unter "autonom" soll in diesem Zusammenhang insbesondere selbsttätig und/oder selbsthaltend verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die Hydraulikeinheit ein im Grundkörper angeordnetes, abgeschlossenes Hydrauliksystem umfasst. Insbesondere ist die Hydraulikeinheit frei von externen Hydraulikanschlüssen. Eine konstruktive Ausbildung von externen Hydraulikanschlüssen kann somit vorteilhaft vermieden werden. Weiterhin können Reinraumvorgaben besonders einfach erfüllt werden. Ferner kann eine besonders hohe Betriebssicherheit erreicht werden. Außerdem können Spannkräfte einer mit der Spannvorrichtung gekoppelten Bearbeitungsmaschine zur Verspannung des Spannstücks vermieden werden, was wiederum zu einer besonders hohen Bearbeitungspräzision führen kann.

Des Weiteren wird vorgeschlagen, dass die Hydraulikeinheit zumindest einen Hydraulikkolben umfasst, der im Grundkörper verschiebbar gelagert ist und der zur Erzeugung des Hydraulikdrucks zur Auslenkung des zumindest einen Spannelements vorgesehen ist. Dadurch kann auf konstruktiv einfache und zuverlässige Weise ein Hydraulikdruck erzeugt werden. Vorteilhaft umfasst die Hydraulikeinheit genau einen Hydraulikkolben. Insbesondere ist der Hydraulikkolben in einem Hydraulikzylinder gelagert, der vom Grundkörper ausgebildet ist.

Ferner wird vorgeschlagen, dass die Hydraulikeinheit zumindest eine Energiespeichereinheit zur Ausübung einer Kraft auf den zumindest einen Hydraulikkolben aufweist. Dadurch kann die Hydraulikeinheit vorteilhaft besonders zuverlässig mit einer selbsthaltenden Funktion ausgebildet werden.

Weiterhin wird vorgeschlagen, dass die Energiespeichereinheit zumindest ein Federelement umfasst. Dadurch kann die Energiespeichereinheit besonders betriebssicher und kostengünstig ausgebildet werden. Das zumindest eine Federelement bildet vorzugsweise zumindest eine Druckfeder, zumindest eine Schraubenfeder und/oder besonders vorteilhaft zumindest eine Tellerfeder aus. Vorteilhaft umfasst die Energiespeichereinheit eine Vielzahl an Tellerfedern. Weiterhin vorteilhaft liegen die Tellerfedern axial versetzt aneinander an.

Zudem wird vorgeschlagen, dass die Hydraulikeinheit zumindest eine Zugstange umfasst, über welche die Energiespeichereinheit mit dem zumindest einen Hydraulikkolben verbunden ist. Dadurch kann eine besonders sichere Kraftübertragung zwischen der Energiespeichereinheit und dem zumindest einen Hydraulikkolben erreicht werden.

Ferner wird vorgeschlagen, dass die Hydraulikeinheit zumindest ein Entspannungselement umfasst, das zu einer mechanischen Kopplung mit einem externen Betätigungsteil und zu einer Reduzierung des Hydraulikdrucks vorgesehen ist. Alternativ ist die Energiespeichereinheit über verschiedene Hebelelemente mit dem zumindest einen Hydraulikkolben gekoppelt.

Des Weiteren wird vorgeschlagen, dass das zumindest eine Entspannungselement starr mit dem zumindest einen Hydraulikkolben gekoppelt ist. Dadurch kann eine besonders betriebssichere Lösung eines Spannstücks von der Spannvorrichtung erfolgen. Alternativ wird vorgeschlagen, dass das zumindest eine Entspannungselement über Hebelelemente mit dem zumindest einen Hydraulikkolben gekoppelt ist.

Weiterhin wird vorgeschlagen, dass das zumindest eine Entspannungselement eine Anschlagplatte ausbildet, die zur Bildung eines mechanischen Druckanschlags mit dem externen Betätigungsteil vorgesehen ist. Dadurch kann eine besonders einfache mechanische Kraftübertragung vom externen Betätigungsteil auf das zumindest eine Entspannungselement erfolgen. Ein Anschluss der Spannvorrichtung an eine Bearbeitungsmaschine kann besonders schnell und betriebssicher erfolgen.

Zudem wird vorgeschlagen, dass das zumindest eine Entspannungselement zu einer Spannung des zumindest einen Federelements vorgesehen ist. Dadurch kann eine besonders betriebssichere und konstruktiv einfache Reduzierung des Hydraulikdrucks erzielt werden.

Es wird ferner eine Bearbeitungsmaschine, insbesondere eine Werkzeugschleifmaschine, mit einer erfindungsgemäßen Spannvorrichtung vorgeschlagen. Die Bearbeitungsmaschine kann insbesondere auch als eine computergesteuerte Fräs-, Bohr-, Dreh-, Schleif- und/oder Sägemaschine ausgebildet sein.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

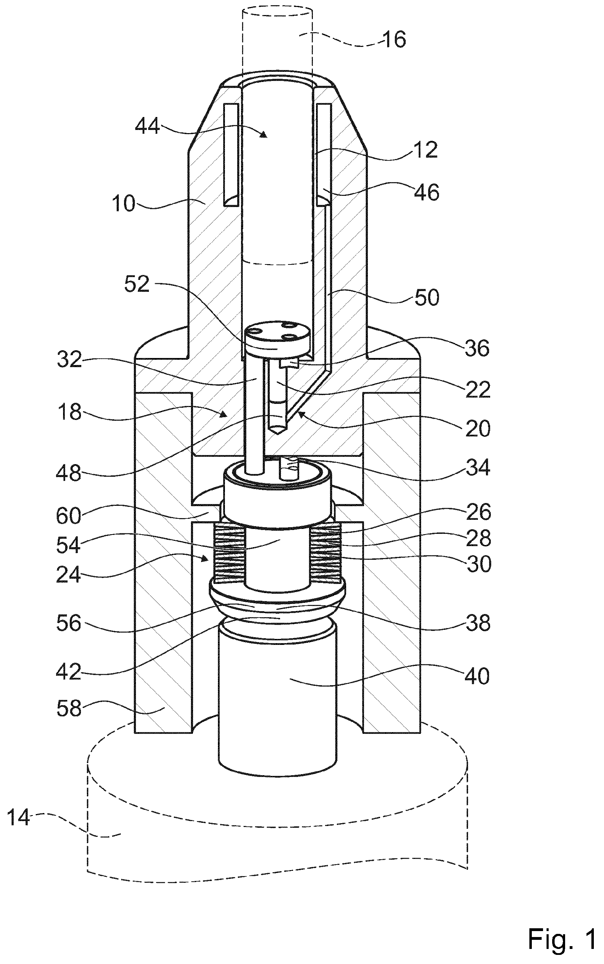

- Fig. 1: einen perspektivischen Teilschnitt durch eine erfindungsgemäße Spannvorrichtung.

### Beschreibung des Ausführungsbeispiels

Die Figur 1 zeigt eine hydraulische Spannvorrichtung, die mit einer schematisch dargestellten Bearbeitungsmaschine 14 gekoppelt ist. Die Spannvorrichtung ist lösbar mit der Bearbeitungsmaschine 14 gekoppelt. Die Bearbeitungsmaschine 14 bildet eine computergesteuerte Werkzeugschleifmaschine aus. Es ist in diesem Zusammenhang jedoch auch denkbar, dass die Bearbeitungsmaschine 14 eine andere, dem Fachmann als sinnvoll erscheinende Werkzeugmaschine ausbildet, wie insbesondere eine Drehmaschine, eine Bohrmaschine, eine Fräsmaschine, eine Sägemaschine, eine Hobelmaschine, eine Schleifmaschine und/oder eine Honmaschine.

Die Spannvorrichtung weist einen Grundkörper 10 auf. Der Grundkörper 10 bildet eine Spannhülse aus. Die Spannvorrichtung weist eine Hydraulikeinheit 18 auf. Die Hydraulikeinheit 18 umfasst ein Hydrodehn-Spannsystem, welches hier nur schematisch angedeutet ist. Die Spannvorrichtung umfasst ein hydraulisch auslenkbares Spannelement 12. Das Spannelement 12 ist vom Grundkörper 10 ausgebildet. Das Spannelement 12 ist dazu vorgesehen, ein Spannstück 16 radial und axial zu verspannen. Das Spannstück 16 kann in diesem Zusammenhang ein Werkzeug zur Bearbeitung eines Werkstücks oder auch ein zu bearbeitendes Werkstück sein.

Das Spannelement 12 bildet eine umlaufende Wandung aus. Die Wandung umläuft vollständig einen Aufnahmebereich 44 für das Spannstück 16. In einem verspannten Zustand liegt die Wandung in radialer Richtung am Spannstück 16 an. In radialer Richtung nach außen hin betrachtet, grenzt an das Spannelement 12 eine Hydraulikausnehmung 46 an. Die Hydraulikausnehmung 46 ist innerhalb des Grundkörpers 10 angeordnet. Die Hydraulikausnehmung 46 ist in einem Betriebszustand mit einem hier nicht gezeigten Hydraulikfluid befüllt. Eine Wandstärke des Spannelements 12 ist von einem Fachmann so gering gewählt, dass bei einem Überdruck in der Hydraulikausnehmung 46 eine elastische Deformation des Spannelements 12 erfolgt, die eine ausreichende Verspannung des Spannstücks 16 bewirkt.

Die Hydraulikeinheit 18 ist zu einer autonomen Erzeugung eines Hydraulikdrucks vorgesehen. Der Hydraulikdruck ist zu einer Auslenkung des Spannelements 12 vorgesehen. Die Hydraulikeinheit 18 weist einen Hydraulikzylinder 48 auf. Der Hydraulikzylinder 48 ist vom Grundkörper 10 ausgebildet. Die Hydraulikeinheit 18 umfasst einen Hydraulikkolben 22. Es ist in diesem Zusammenhang auch denkbar, dass die Hydraulikeinheit 18 mehrere Hydraulikkolben umfasst. Der Hydraulikkolben 22 ist im Grundkörper 10 verschiebbar gelagert. Genauer gesagt ist der Hydraulikkolben 22 zur Erzeugung des Hydraulikdrucks und zur Auslenkung des Spannelements 12 vorgesehen. Der Hydraulikkolben 22 ist im Hydraulikzylinder 48 gelagert. Die Hydraulikeinheit 18 weist einen Hydraulikkanal 50 auf. Der Hydraulikkanal 50 ist im Grundkörper 10 angeordnet. Der Hydraulikkanal 50 verbindet den Hydraulikzylinder 48 mit der Hydraulikausnehmung 46. In einem Betriebszustand sind der Hydraulikkanal 50 und der Hydraulikzylinder 48 bis zum Hydraulikkolben 22 mit dem Hydraulikfluid gefüllt. Die Hydraulikeinheit 18 umfasst somit ein im Grundkörper 10 angeordnetes, abgeschlossenes Hydrauliksystem 20. Die Hydraulikeinheit 18 ist frei von externen Hydraulikanschlüssen.

Der Hydraulikkolben 22 ist im Betriebszustand federbelastet. Die Hydraulikeinheit 18 weist eine Energiespeichereinheit 24 zur Ausübung einer Kraft auf den Hydraulikkolben 22 auf. Die Energiespeichereinheit 24 umfasst eine Vielzahl an Federelementen 26, 28, 30, von denen hier aus Gründen der Übersichtlichkeit lediglich drei Federelemente 26, 28, 30 bezeichnet sind. Die Federelemente 26, 28, 30 bilden jeweils eine Tellerfeder aus. Die Federelemente 26, 28, 30 liegen in eine axiale Richtung betrachtet hintereinander aneinander an.

Die Hydraulikeinheit 18 umfasst drei Zugstangen 32, 34, 36. Über die Zugstangen 32, 34, 36 ist die Energiespeichereinheit 24 mit dem Hydraulikkolben 22 verbunden. Es ist in diesem Zusammenhang auch denkbar eine andere, dem Fachmann als sinnvoll erscheinende Verbindung zwischen der Energiespeichereinheit 24 und dem Hydraulikkolben 22 herzustellen, wie insbesondere über eine andere Anzahl an Zugstangen, über ein mechanisches Getriebe und/oder über verschiedene Hebelelemente. Die Zugstangen 32, 34, 36 sind zylinderförmig ausgebildet. Die Hydraulikeinheit 18 weist eine Verbindungsplatte 52 auf, welche die Zugstangen 32, 34, 36 mit dem Hydraulikkolben 22 verbindet. Die Zugstangen 32, 34, 36 und der Hydraulikkolben 22 ragen aus einer selben Seite der Verbindungsplatte 52 heraus. Die Zugstangen 32, 34, 36 sind verschiebbar im Grundkörper 10 gelagert. Über ein zylinderförmiges Verbindungsteil 54 sind die Zugstangen 32, 34, 36 mit einer Endplatte 56 verbunden.

Die Federelemente 26, 28, 30 stützen sich an der Endplatte 56 und einem Gehäuse 58 der Spannvorrichtung ab. Das Gehäuse 58 ist fest mit dem Grundkörper 10 verbunden. Das Gehäuse 58 ist rohrförmig ausgebildet. Das Gehäuse 58 weist einen Innenflansch 60 auf, der zur Abstützung der Federelemente 26, 28, 30 vorgesehen ist. Vom Innenflansch 60 ausgehend, erstrecken sich die Federelemente 26, 28, 30 in Richtung der Bearbeitungsmaschine 14. Die Zugstangen 32, 34, 36 sind somit ebenfalls in Richtung der Bearbeitungsmaschine 14 belastet. Der Hydraulikkolben 22 übt in Richtung der Bearbeitungsmaschine 14 einen Druck auf das Hydraulikfluid aus. Durch die Federelemente 26, 28, 30 bleibt der Hydraulikdruck unabhängig von einem Zustand der Bearbeitungsmaschine 14 erhalten. Das Spannstück 16 wird somit autonom von der Spannvorrichtung gehalten.

Zu einem Lösen einer Spannverbindung umfasst die Hydraulikeinheit 18 ein Entspannungselement 38. Das Entspannungselement 38 ist einstückig mit der Endplatte 56 ausgebildet. Das Entspannungselement 38 ist zu einer mechanischen Kopplung mit einem externen Betätigungsteil 40 und zu einer Reduzierung des Hydraulikdrucks vorgesehen. Über die Zugstangen 32, 34, 36 ist das Entspannungselement 38 starr mit dem Hydraulikkolben 22 gekoppelt.

Das Entspannungselement 38 bildet eine Anschlagplatte 42 aus. Die Anschlagplatte 42 ist zur Bildung eines mechanischen Druckanschlags mit dem externen Betätigungsteil 40 vorgesehen. Das externe Betätigungsteil 40 ist Teil der Bearbeitungsmaschine 14. Das Betätigungsteil 40 ist zylinderförmig ausgebildet. Zu einem Lösen der Spannverbindung zwischen dem Spannelement 12 und dem Spannstück 16 muss der Hydraulikdruck gesenkt werden. Hierzu muss der Hydraulikkolben 22 entgegen der von der Energiespeichereinheit 24 erzeugten Federkraft bewegt werden. Das Entspannungselement 38 ist somit zu einer Spannung der Federelemente 26, 28, 30 vorgesehen.

Das externe Betätigungsteil 40 wird zu einer Lösung der Spannverbindung in das Gehäuse 58 bewegt. Das externe Betätigungsteil 40 drückt gegen die Anschlagplatte 42. Die Federelemente 26, 28, 30 werden dadurch zusammengedrückt und der Hydraulikkolben 22 bewegt sich in Axialrichtung betrachtet von der Bearbeitungsmaschine 14 weg. Der Raum innerhalb des Hydraulikzylinders 48 wird dadurch vergrößert, wodurch der Hydraulikdruck reduziert wird.

Zu einer Wiederherstellung der Spannverbindung wird das externe Betätigungsteil 40 wieder in Richtung der Federkraft der Federelemente 26, 28, 30 bewegt. Das externe Betätigungsteil 40 kann dabei entweder durch die Federkraft der Federelemente 26, 28, 30 oder durch einen separaten, nicht gezeigten Antrieb bewegt werden.

## Patentansprüche

1. Spannvorrichtung, insbesondere hydraulische Spannvorrichtung, mit einem Grundkörper (10) und zumindest einem hydraulisch betätigbaren Spannelement (12), das vom Grundkörper (10) ausgebildet und dazu vorgesehen ist, zumindest ein Spannstück (16) radial und/oder axial zu verspannen,
**gekennzeichnet durch**
eine Hydraulikeinheit (18), die zu einer autonomen Erzeugung eines Hydraulikdrucks zu einer Auslenkung des zumindest einen Spannelements (12) vorgesehen ist.

2. Spannvorrichtung nach Anspruch 1,
**dadurch gekennzeichnet, dass**
die Hydraulikeinheit (18) ein im Grundkörper (10) angeordnetes, abgeschlossenes Hydrauliksystem (20) umfasst.

3. Spannvorrichtung nach Anspruch 1 oder 2,
**dadurch gekennzeichnet, dass**
die Hydraulikeinheit (18) zumindest einen Hydraulikkolben (22) umfasst, der im Grundkörper (10) verschiebbar gelagert ist und der zur Erzeugung des Hydraulikdrucks zur Auslenkung des zumindest einen Spannelements (12) vorgesehen ist.

4. Spannvorrichtung nach Anspruch 3,
**dadurch gekennzeichnet, dass**
die Hydraulikeinheit (18) zumindest eine Energiespeichereinheit (24) zur Ausübung einer Kraft auf den zumindest einen Hydraulikkolben (22) aufweist.

5. Spannvorrichtung nach Anspruch 4,
**dadurch gekennzeichnet, dass**
die Energiespeichereinheit (24) zumindest ein Federelement (26, 28, 30) umfasst.

6. Spannvorrichtung nach Anspruch 4 oder 5,
**dadurch gekennzeichnet, dass**
die Hydraulikeinheit (18) zumindest eine Zugstange (32, 34, 36) umfasst, über welche die Energiespeichereinheit (24) mit dem zumindest einen Hydraulikkolben (22) verbunden ist.

7. Spannvorrichtung nach einem der vorhergehenden Ansprüche,
**dadurch gekennzeichnet, dass**
die Hydraulikeinheit (18) zumindest ein Entspannungselement (38) umfasst, das zu einer mechanischen Kopplung mit einem externen Betätigungsteil (40) und zu einer Reduzierung des Hydraulikdrucks vorgesehen ist.

8. Spannvorrichtung zumindest nach den Ansprüchen 3 und 7,
**dadurch gekennzeichnet, dass**
das zumindest eine Entspannungselement (38) starr mit dem zumindest einen Hydraulikkolben (22) gekoppelt ist.

9. Spannvorrichtung nach Anspruch 7 oder 8,
**dadurch gekennzeichnet, dass**
das zumindest eine Entspannungselement (38) eine Anschlagplatte (42) ausbildet, die zur Bildung eines mechanischen Druckanschlags mit dem externen Betätigungsteil (40) vorgesehen ist.

10. Spannvorrichtung zumindest nach den Ansprüchen 5 und 7,
**dadurch gekennzeichnet, dass** das zumindest eine Entspannungselement (38) zu einer Spannung des zumindest einen Federelements (26, 28, 30) vorgesehen ist.

11. Bearbeitungsmaschine (14), insbesondere Werkzeugschleifmaschine, mit einer Spannvorrichtung nach einem der vorhergehenden Ansprüche.
